# EUROPEAN PATENT APPLICATION

(11) **EP 1 868 331 A2**
(43) Date of publication of application: **19.12.2007**
(21) Application number: 06255540.4
(22) Date of filing: 27.10.2006
(51) Int. Cl.: H04L 12/56, H04Q 7/38

(54) **Mobile communication system and data retransmission control method**

(30) Priority: 16.06.2006 JP 2006167950
(71) Applicant: Fujitsu Ltd., Kawasaki-shi, Kanagawa 211-8588 (JP)
(72) Inventor: Mao, Noriyuki, c/o Fujitsu Limited, Kawasaki-shi, Kanagawa 211-8588 (JP); Hasegawa, Hajime, c/o Fujitsu Limited, Kawasaki-shi, Kanagawa 211-8588 (JP)
(74) Representative: Stebbing, Timothy Charles

(57) **Abstract**

When user equipment(UE)which performs HSDPA communication using a HS-DSCH changes from a first cell to another cell, a wireless base station control device(RNC)checks whether there exist at the wireless base station (BTS#1) of the first cell, accumulated data (transmit-wait data) which are to be transmitted to the user equipment (UE), and when such accumulated data exist, transfers the accumulated data to the wireless base station (BTS#2) of the second cell via the wireless base station control device(RNC).

## Description

This application is based upon and claims the benefit of priority from the prior Japanese Patent Application No.2006-167950 filed on June 16, 2006.

This invention relates to a mobile communication system adopting HSDPA (High Speed Downlink Packet Access), which is a data communication standard for third-generation (3G) portable telephony, and to a data retransmission control method for same, and in particular relates to a mobile communication system which, at the time of cell change of user equipment (UE), retransmits accumulated data of the cell change origin from the cell change destination, and a data retransmission control method for same.

HSDPA (High Speed Downlink Packet Access) in a UMTS (Universal Mobile Telecommunication System) is a standard for faster data communication in third-generation (3G) mobile telephone systems such as W-CDMA, and has been standardized as the "Release 5" specification issued by the 3rd Generation Partnership Project (3GPP), a 3G standardization body. HSDPA has such features as (1) shared use of a single physical channel by a plurality of user equipment (UE) units through time division, (2) automatic selection of high-speed modulation methods and encoding methods according to radio wave states, and (3) adoption of hybrid ARQ which combines retransmission control (ARQ) and correction code processing.

With respect to technology for cell changes in HSDPA, a method close to hard handovers is defined in which, rather than transmitting the same information simultaneously from a plurality of cells in non-interruptive switching with no data losses, as in the case of soft handovers, downlink information is transmitted from a single cell at a given moment in time. With respect to HSDPA technology for cell changes, the messages, algorithms and similar used in the 3GPP specification are recommended.

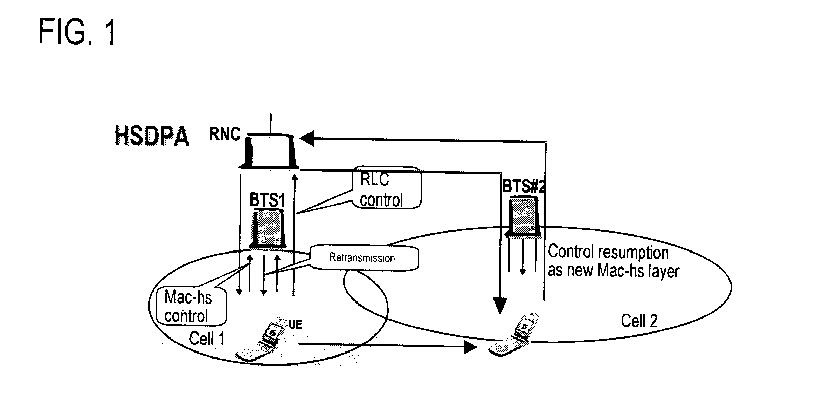

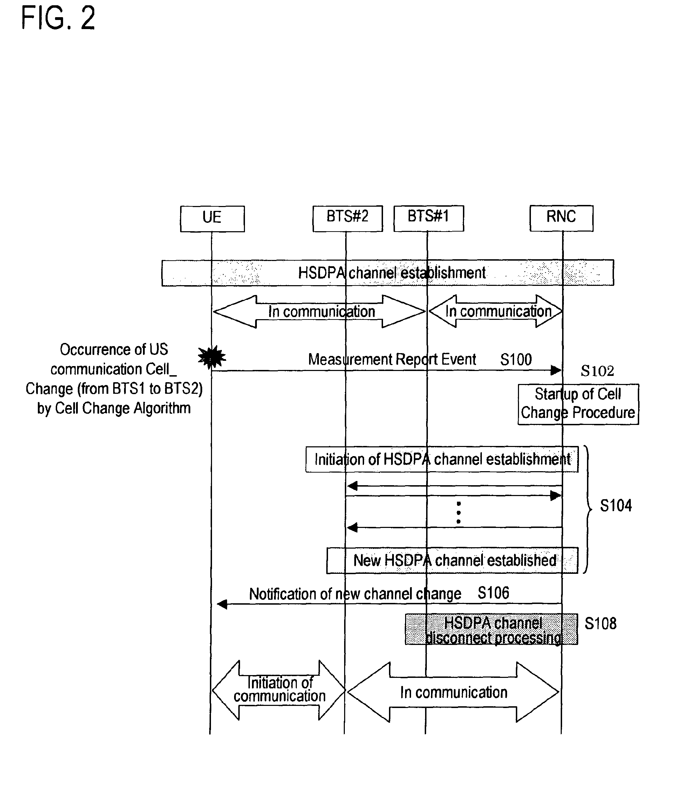

Fig. 1 explains cell changes in HSDPA communication using technology of the prior art. Fig. 2 shows an HSDPA communication sequence in the technology of the prior art. In HSDPA, a HS-DSCH (High Speed Downlink Shared Channel) is used as the downlink transport channel for data transmission, and a **MAC**-hs (High Speed Media Access Control) layer, which is an HS-DSCH protocol, is used for data communication between the user equipment (UE) and the wireless Base Transmission Station (BTS).

In a state in which a channel is established between user equipment UE and a base transmission station BTS1, the user equipment UE within cell 1 performs data communication with a base transmission station 1 (BTS) which controls communication in cell 1 by means of the **MAC**-hs (High Speed Media Access Control) layer. Further, the user equipment UE communicates with a wireless Radio Network Controller (RNC) via the base transmission station BTS1 by means of a Radio Link Control (RLC) layer, which is a higher-level layer.

When the user equipment UE changes from cell 1 to cell 2, the radio network controller RNC receives a Measurement Report Event message accompanying cell changes of the user equipment UE (S100). Then, the radio network controller RNC initiates cell change processing (S102), establishes a new channel between the user equipment UE and a base transmission station BTS2 (S104), and after transmitting to the user equipment a new channel change notification (S106), disconnects the channel between the user equipment UE and the base transmission station BTS1 (S108). By this means, cell change processing for the user equipment UE is completed, and the user equipment UE performs data communication with the base transmission station BTS2 using the **MAC**-hs layer. Moreover, the user equipment UE communicates with the radio network controller RNC via the base transmission station BTS2 using the radio link control (RLC) layer.

However, as a result of disconnection of the channel with the base transmission station BTS1 during cell changes, data for transmission which has accumulated at the base transmission station BTS1 can no longer be transmitted to the user equipment UE. Specifically, in HSDPA, a single physical channel is shared among a plurality of user equipment units (UEs) through time division. That is, the base transmission station BTS buffers the data for transmission and uses transmission-enabled timing to control allocation; consequently there are cases in which data for transmission at the base transmission station BTS at the change origin remains in a transmit-wait state during a cell change. The **MAC**-hs layer has no function for data retransmission upon cell change, and so data retransmission during cell changes is not guaranteed.

Data which could not be received by the user equipment UE through the **MAC-**hs layer of the HS-DSCH can possibly be recovered using a higher-level application layer and nondelivery processing of the RLC layer; but when the number of retransmissions, timer time, or other conditions stipulated in the relevant nondelivery processing are not satisfied, nondelivery processing is not performed, and so data loss occurs.

In the following Patent Reference 1, a method is disclosed, relating to data retransmission control in HSDPA communication during cell changes, in which a sequence number is stored at the time of initiation of a cell change, and data transmitted later than the time of initiation of the cell change is transferred using the **MAC**-hs layer.
Patent Reference 1: Japanese Patent Laid-Open No. 2004-282652

However, in the above Patent Reference 1, the sequence number at the time of initiation of the cell change is stored, and data transmitted after the time of initiation of the cell change is transferred, and so data which has already been transmitted to the base transmission station BTS of the change origin prior to the initiation of the cell change is not retransmitted.

Streaming distribution of video data is one representative service using HSDPA; but there is the problem that when data losses occur during cell changes of the user equipment UE, the video becomes disordered. Hence there is a need for reliable transfer of accumulated data in the transmit-wait state from the base transmission station BTS of the cell change origin to the base transmission station BTS of the cell change destination, without depending on nondelivery processing by a higher-level layer, when user equipment UE changes to another cell during HSDPA communication.

### It is therefore desirable to provide

a mobile communication system, and a data retransmission control method of same, such that data loss does not occur during cell changes of user equipment UE during HSDPA communication.

**According to a first aspect of the invention, there is provided** a mobile communication system adopting HSDPA (High Speed Downlink Packet Access), comprising a first base station which performs communication with the user equipment using the HSDPA, a second base station which upon movement of the user equipment performs communication with the user equipment using the HSDPA in place of the first base station, and a base station control device which upon movement of the user equipment switches a base station performing HSDPA communication with the user equipment from the first base station to the second base station, characterized in that, when switching the base station communicating with the user equipment from the first base station to the second base station, the base station control device checks whether accumulated data to be transmitted to the user equipment exist at the first base station, and when accumulated data exist, acquires the accumulated data from the first base station, transfers the data to the second base station, and causes the accumulated data to be transmitted from the second base station to the user equipment.

**Preferably, the base** station control device transmits to the first base station a deletion request signal requesting deletion of a channel established with the user equipment, and in that the deletion request signal comprises an information element which queries the first base station as to the presence or absence of accumulated data.

**In this case, further preferably, the first base** station, in response to the deletion request signal from the base station control device, deletes the channel with the user equipment, and also checks for the existence of accumulated data and returns to the base station control device a deletion response signal giving notification of deletion of the channel and comprising the information element which is the result of checking for the existence of accumulated data; when accumulated data exist, the first base station transmits the accumulated data to the base station control device, and the base station control device stores the accumulated data, and after establishing a new channel between the user equipment and the second base station, transmits the accumulated data to the second base station.

**Preferably also, the second base** station, after transmitting the accumulated data to the user equipment, transmits, to the user equipment, data addressed to the user equipment and transmitted to the second base station.

A data retransmission control method in a mobile communication system of this invention is a data retransmission control method in a mobile communication system adopting HSDPA (High Speed Downlink Packet Access), characterized in comprising a step in which a base station control device, which in response to movement of user equipment switches a base station performing HSDPA communication with the user equipment from a first base station to a second base station, checks whether accumulated data to be transmitted addressed to the user equipment exist at the first base station, and a step in which, when the accumulated data exist, the accumulated data are acquired from the first base station and are transferred to the second base station.

By means of this invention, when in a mobile communication system which performs **HSDPA** communication a user equipment unit changes cells during HSDPA communication (handover), accumulated data for the user equipment which remains at the base station which is the origin of the cell change (transmit-wait data) can be transferred, via a base station control device, to the base station which is the cell change destination, so that cell changes (handover) can be performed without the occurrence of data loss, even during HSDPA communication. Hence a highly reliable HSDPA mobile communication system can be provided.

**Reference will now be made, by way of example only, to the accompanying drawings in which:**
Fig. 1: A diagram explaining cell changes in HSDPA communication in the prior art.
Fig. 2: A diagram showing the sequence of HSDPA communication in the prior art.
Fig. 3: A diagram which explains the retransmission control method for HSDPA communication in an aspect of the invention.
Fig. 4: A diagram showing in detail the sequence of retransmission control processing for HSDPA communication in an aspect of the invention.
Fig. 5: Fig. 5 is a flowchart of processing by the control device RNC for retransmission control processing for HSDPA communication in an aspect of the invention.
Fig. 6: A diagram showing a RADIO LINK RECONFIGURATION PREPARE message (with "Piling up Mac confirm request" IE) used in an aspect of the invention.
Fig. 7: A diagram showing a RADIO LINK RECONFIGURATION READY message (with "Piling up Mac confirm request" IE) used in an aspect of the invention.
Fig. 8: A diagram showing the data frame structure (HS-DSCH data frame) at the time of accumulated data transmission.

Below, **features** of the invention are explained referring to the drawings. However, these **features** do not limit the technical scope of the invention.

In this invention, when user equipment UE which is performing HSDPA communication using a HS-DSCH changes from the current communication area (cell) to another cell, a base station control device (hereafter "control device") RNC checks whether there exists, in the wireless base station device (hereafter "base station") BTS which is the cell change origin, accumulated data to be transmitted to the user equipment UE (transmit-wait data); if there exists accumulated data, the accumulated data is transmitted, via the control device RNC, to the base station BTS at the change destination. By this means, even upon movement between HSDPA cells requiring an interruption for movement between cells, the user equipment UE can change cells without the occurrence of data loss.

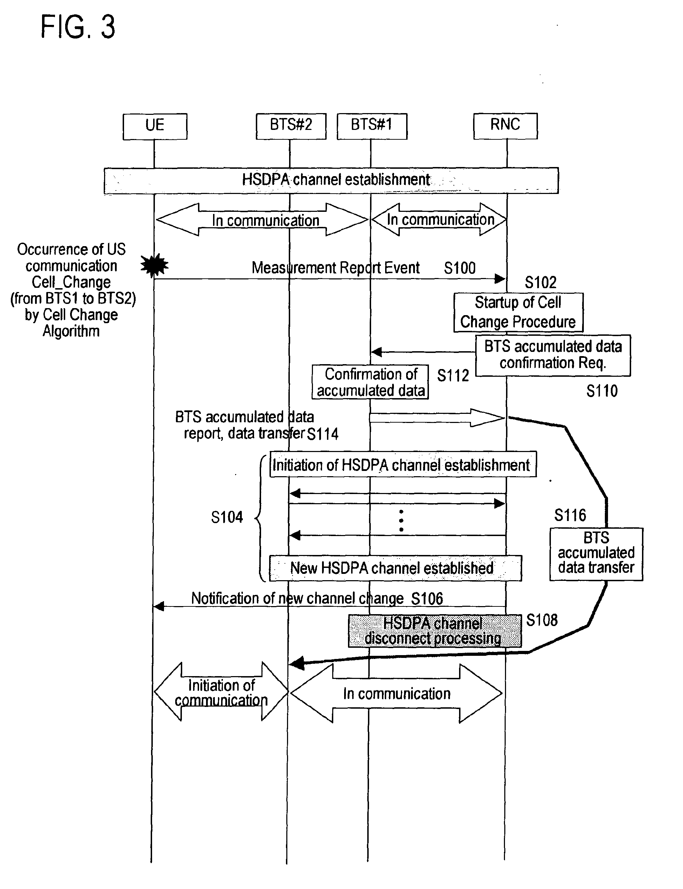

Fig. 3 explains a retransmission control method for HSDPA communication in an **embodiment of the** invention. In a state in which a channel is established between the user equipment UE and the base station BTS1, when the user equipment UE changes from cell 1 to cell 2 similarly to the sequence in Fig. 2, the control device RNC receives a Measurement Report Event message from the user equipment UE accompanying the cell change (S100). Then, the control device RNC initiates cell change processing (S102), establishes a new channel between the user equipment UE and the base station BTS2 (S104), and after transmitting a new channel change notification to the user equipment (S106), disconnects the channel between the user equipment UE and the base station BTS1 (S108). By this means, cell change processing for the user equipment UE is completed, and the user equipment UE employs the **MAC**-hs layer of the base station BTS2 for data communication.

In addition to the processing **previously proposed and described earlier,** when the control device RNC initiates cell change processing, an accumulated data check request is transmitted to the base station BTS1 of the cell change origin via the existing channel with the base station BTS1 (S110). The base station BTS1 checks its own buffer for the existence of accumulated data to be transmitted to the user equipment UE which has changed cells (S112), and if accumulated data exists, transfers the accumulated data to the control device RNC (S116). User equipment units UE are identified from the HS-DSCH RNTI and **MAC**-d Flow IDs. The control device RNC establishes a new channel with the base station BTS2, and after disconnecting the channel with the base station BTS1 transfers the accumulated data to the base station BTS2. The base station BTS2 transmits the accumulated data thus sent to the user equipment UE by means of communication with the user equipment UE using the newly established **MAC**-hs layer. After accumulated data transmission, the control device RNC transmits the next data group to the base station BTS2.

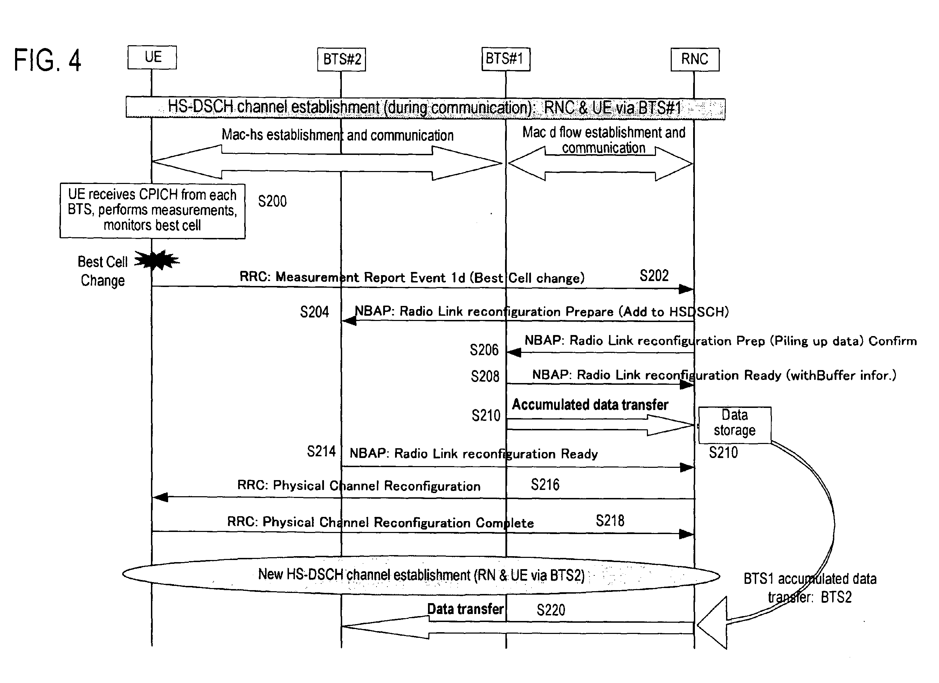

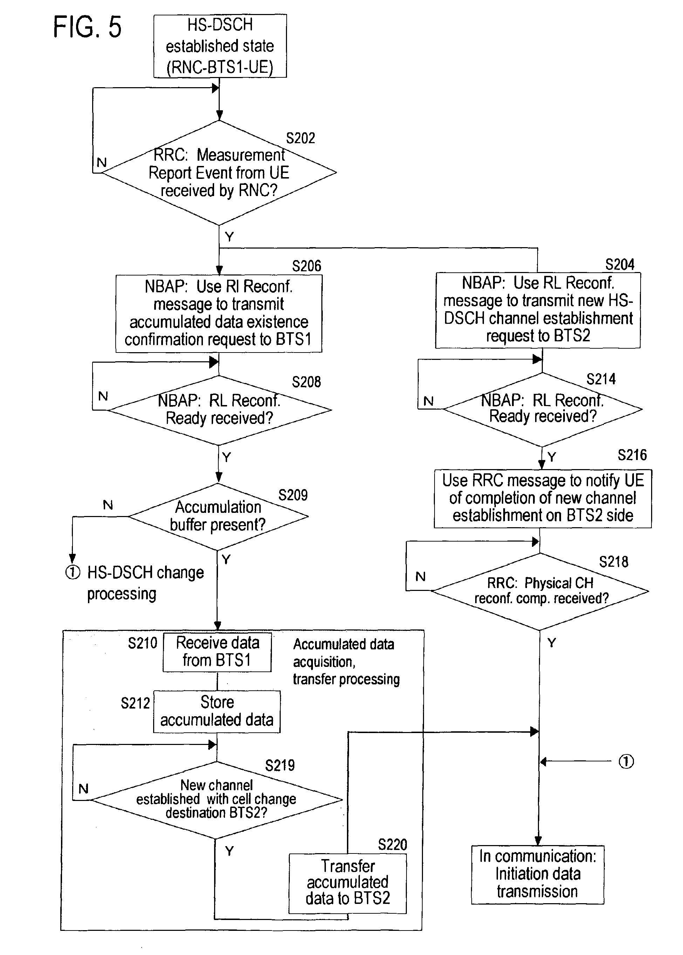

Fig. 4 shows the sequence between devices of retransmission control processing in HSDPA communication in the aspect of the invention. Fig. 5 is a flowchart of processing by the control device RNC for retransmission control processing in HSDPA communication in the aspect of the invention. Fig. 5 describes processing by the control device RNC in Fig. 4; the explanation follows Fig. 4, while referring to Fig. 5.

The base station BTS1 is the cell change origin base station BTS, and the base station BTS2 is the cell change destination base station BTS. A HS-DSCH channel connecting the user equipment UE and the control device RNC via the base station BTS1 is established. The protocol used between the user equipment UE and base station BTS1 is **MAC**-hs, and the protocol used between the base station BTS1 and the control device RNC is **MAC-**d Flow.

The user equipment UE receives CPICH from each base station BTS and monitors the base station BTS with the most favorable radio wave state (best cell) (S200). When the base station BTS with the most favorable radio wave state changes from base station BTS1 to base station BTS2, the user equipment UE transmits to the control device RNC a RRC (Radio Link Control Protocol) Measurement Report Event message giving notification of this fact (S202). RRC is a communication protocol between user equipment UE and a control device RNC providing for straight-through transfer via base stations BTS.

When the relevant message is received by the control device RNC, the control device RNC transmits to base station BTS2 a NBAP (Node B Application Part Protocol) Radio Link Reconfiguration Prepare message requesting establishment of a new HS-DSCH channel (S204). In parallel with this, the control device RNC transmits to base station BTS1 a NBAP (Node B Application Part Protocol) Radio Link Reconfiguration Prepare message requesting deletion of the current HS-DSCH channel (S206).

Upon receiving a Radio Link Reconfiguration Prepare message from the control device RNC, base station BTS2 establishes a new HS-DSCH channel to the user equipment UE, and transmits to the control device RNC a NBAP Radio Link Reconfiguration Ready message providing notification of the fact of this establishment (S214). When the new HS-DSCH channel with base station BTS2 is established, the control device RNC uses an RRC Physical Channel Reconfiguration message to notify the user equipment UE of the change to the new HS-DSCH channel (S216). The user equipment UE responds to the RRC Physical Channel Reconfiguration message with a Physical Channel Reconfiguration Complete response message (S218). By this means, processing for the cell change from base station BTS1 to base station BTS2 is completed.

On the other hand, upon receiving the Radio Link Reconfiguration Prepare message from the control device RNC, base station BTS1 deletes the current HS-DSCH channel.

At this time, the control device RNC adds a "Piling up **MAC** data confirm request" IE (Information Element), to check for the presence of accumulated data for the user equipment UE, to the NBAP Radio Link Reconfiguration Prepare message for transmission to the change origin base station BTS1. The term "piling up" is used as same meaning of "accumulating", and the term "confirm" is used as same meaning of "checking" in the present application.

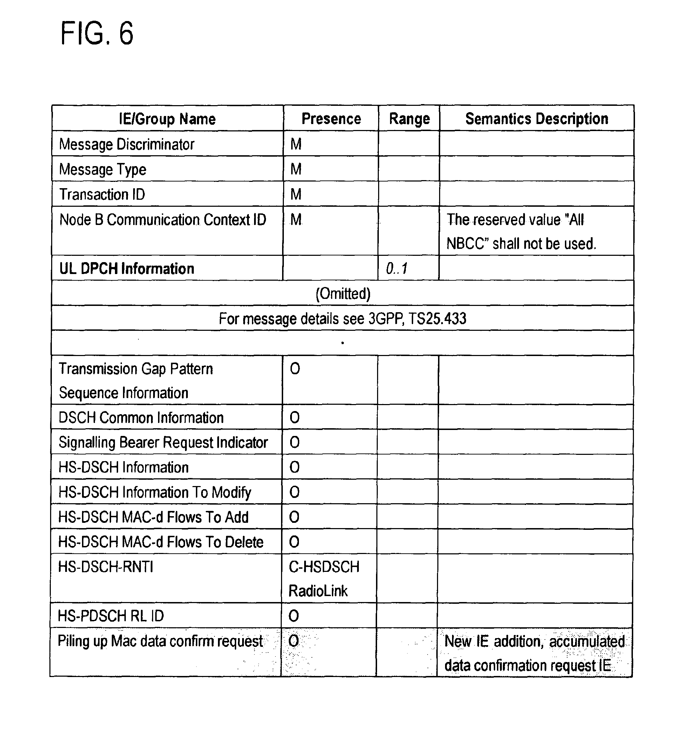

Fig. 6 shows a RADIO LINK RECONFIGURATION PREPARE message (with a "Piling up **MAC** data confirm request" IE), used in **this embodiment.** In Fig. 6, "Presence" indicates whether the IE is required or not; "M" represents "Mandatory", and "O" represents "Optional". "Presence" in the "Piling up **MAC** data confirm request" IE **in this embodiment is** "O", that is, the IE may or may not exist in the message. In actuality, in this **embodiment the** "Piling up **MAC** data confirm request" IE does exist in the RADIO LINK RECONFIGURATION PREPARE message for notification of the change origin base station BTS1; but a "Piling up **MAC** data confirm request" IE does not exist in a RADIO LINK RECONFIGURATION PREPARE message for notification of the change destination base station BTS2.

Upon receiving the RADIO LINK RECONFIGURATION PREPARE message (with "Piling up **MAC** data confirm request" IE), the change origin base station BTS1 performs processing to delete the HS-DSCH channel to the user equipment UE, and checks whether there is accumulated data for the user equipment UE. In order to identify the user equipment UE, HS-DSCH RNTI (an identifier for each user equipment unit UE) and the **MAC**-d Flow ID (an ID added to data flow) are employed.

Upon completion of the HS-DSCH channel deletion processing, the change origin base station BTS1, when returning a RADIO LINK RECONFIGURATION READY message which is a response to the RADIO LINK RECONFIGURATION PREPARE message, adds to the message a "Piling up **MAC** data confirm response" IE, to report the presence or absence of accumulated data. The "Piling up **MAC** data confirm response" IE comprises a "Buffer size information" IE indicating the size (in bytes) of the accumulated data (S208).

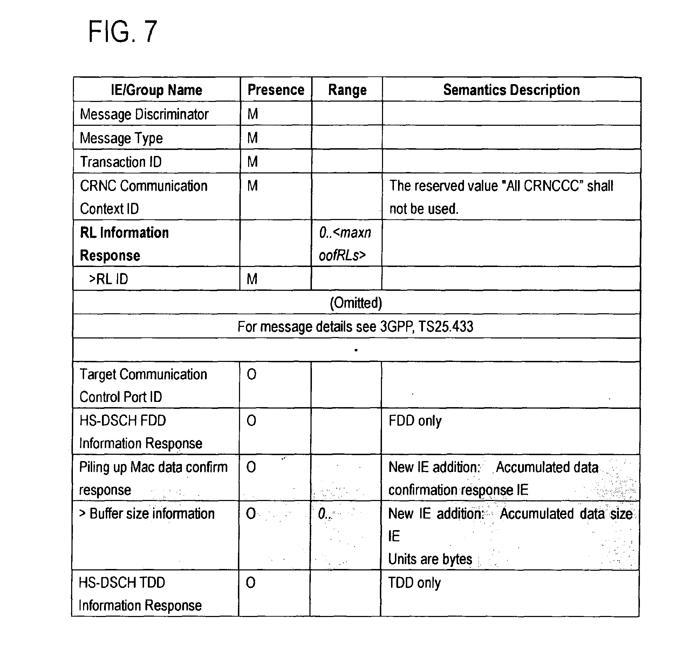

Fig. 7 shows a RADIO LINK RECONFIGURATION READY message (with a "Piling up **MAC** data confirm response" IE) used in this **embodiment.** The "Presence" of the "Piling up **MAC** data confirm response" IE and of the "Buffer size information" IE is "O" (Optional), that is, the IE may or may not exist in the message. In actuality, in this **example** a "Piling up **MAC** data confirm response" IE and a "Buffer size information" IE exist in the RADIO LINK RECONFIGURATION READY message sent from the change origin base station BTS1, but a "Piling up **MAC** data confirm response" IE and a "Buffer size information" IE do not exist in the RADIO LINK RECONFIGURATION READY message sent from the change destination base station BTS2. The "Buffer size information" IE has a numerical value of 0 or greater, and when 0, indicates that there is no accumulated data.

When there is accumulated data for the user equipment UE (S209 in Fig. 5), the change origin base station BTS1, after transmitting the RADIO LINK RECONFIGURATION READY message (with "Piling up **MAC** data confirm response" IE) to the control device RNC, then transmits the accumulated data (S210).

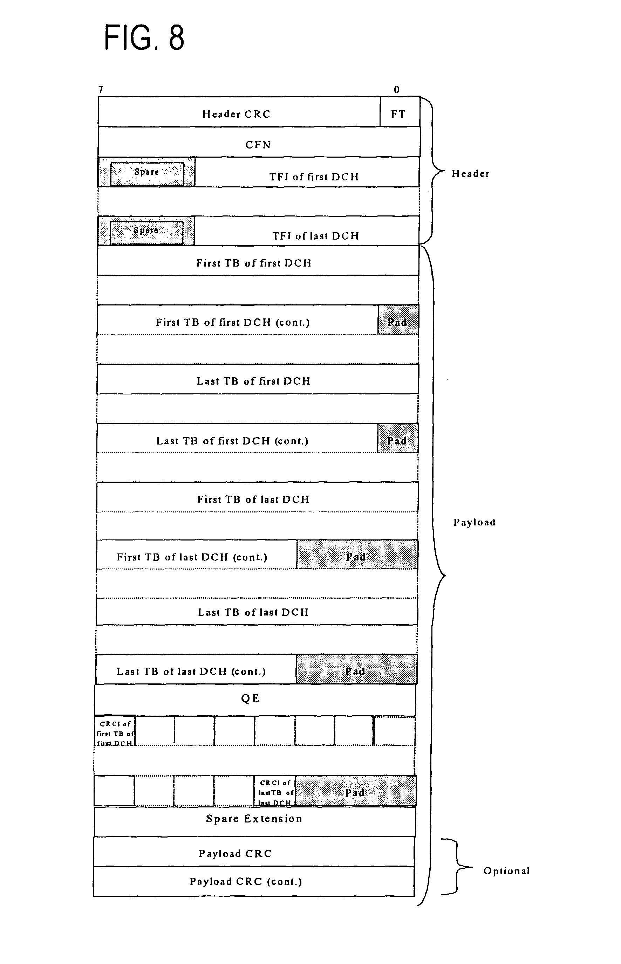

Fig. 8 shows the data frame structure (HS-DSCH data frame) for accumulated data transmission. The control device RNC initiates reception of accumulated data after receiving the RADIO LINK RECONFIGURATION READY message (with "Piling up **MAC** data confirm response" IE) from the change origin base station BTS1, and monitors whether data has been received in the amount of the buffer size indicated by the "Buffer size information" IE in the RADIO LINK RECONFIGURATION READY message (with "Piling up **MAC** data confirm response" IE). When transmitting accumulated data from the change origin base station BTS to the control device RNC, there are cases in which all the accumulated data cannot be transmitted at one time due to the bandwidth between the control device RNC and the base station BTS; but by notifying the control device RNC in advance of the buffer size, the control device RNC can monitor the state of reception of accumulated data (how much data is left) even when the accumulated data is divided for transmission.

Having received all the accumulated data, the control device RNC stores the data (S212), establishes a HS-DSCH channel with the change destination base station BTS2, and monitors for the completion of cell change processing (S219 in Fig. 5). Upon confirming that cell change processing has been completed, the control device RNC transfers accumulated data for the user equipment UE which has been received from the change origin base station BTS1 to the change destination base station BTS2 (S220). By transferring the accumulated data after establishment of the HS-DSCH channel, and prior to transmission of new data to the user equipment UE, data can be received by the user equipment UE in the order in which the data should have been received.

When the accumulated data size in the "Buffer size information" IE is 0, there is no accumulated data for the user equipment UE, and so the control device RNC continues subsequent processing without monitoring the accumulated data reception state. Moreover, the change origin base station BTS1 does not transmit accumulated data.

In this way, in this **embodiment, the** transmit-wait data (untransmitted data) for user equipment UE which has changed cells is acquired by the control device RNC from the cell change origin base station BTS1 and is transferred via the control device RNC to the cell change destination base station BTS, so that even when there exists accumulated data (transmit-wait data) which has already been transmitted by the control device RNC to the cell change origin base station BTS but has not yet been transmitted to the user equipment UE, the accumulated data can be transferred to the change destination base station BTS, and so HSDPA communication can be performed without data loss even during cell changes.

Further, because the change origin base station BTS is queried as to the existence of accumulated data, it is sufficient merely to add an information element (IE) for confirmation of the presence of accumulated data to an existing message (NBAP protocol signal) used for deletion of the channel with the change origin base station BTS, without adding a new message; hence existing message communication can be used to effect transfer of accumulated data, without the need for complex message communication.

Moreover, after transmitting the accumulated data of the change origin base station BTS to the user equipment UE, the change destination base station BTS then transmits to the user equipment UE any data addressed to the user equipment UE and transmitted to the change destination base station BTS, so that data is transmitted in the correct order even during cell changes.

## Claims

1. A mobile communication system, adopting HSDPA (High Speed Downlink Packet Access), comprising:
a first base station which performs communication with user equipment using the HSDPA;
a second base station which, due to movement of the user equipment, performs communication using the HSDPA with the user equipment in place of the first base station; and,
a base station control device which, due to movement of the user equipment, switches a base station which performs HSDPA communication with the user equipment from the first base station to the second base station, wherein
when switching the base station communicating with the user equipment from the first base station to the second base station, the base station control device checks whether accumulated data to be transmitted to the user equipment exist at the first base station, and when accumulated data exist, acquires the accumulated data from the first base station, transfers the data to the second base station, and causes the accumulated data to be transmitted from the second base station to the user equipment.

2. The mobile communication system according to Claim 1, wherein
the base station control device transmits to the first base station a deletion request signal requesting deletion of a channel established with the user equipment, and
the deletion request signal comprises an information element which queries the first base station as to the presence or absence of accumulated data.

3. The mobile communication system according to Claim 2, wherein
the first base station, in response to the deletion request signal from the base station control device, deletes the channel with the user equipment, and also checks for the existence of accumulated data and returns to the base station control device a deletion response signal giving notification of deletion of the channel and comprising an information element which is the result of checking for presence or absence of accumulated data,
when accumulated data exist, the first base station transmits the accumulated data to the base station control device, and
the base station control device stores the accumulated data, and after establishing a new channel between the user equipment and the second base station, transmits the accumulated data to the second base station.

4. The mobile communication system **of claim 1, 2, or 3,** wherein the second base station, after transmitting the accumulated data to the user equipment, transmits, to the user equipment, data addressed to the user equipment and transmitted to the second base station.

5. A data retransmission control method in a mobile communication system adopting HSDPA (High Speed Downlink Packet Access), comprising steps of:
a checking step, by a base station control **device, of switching** a base station performing HSDPA communication with the user equipment from a first base station to a second base station in response to movement of user equipment, checking whether accumulated data to be transmitted addressed to the user equipment exist at the first base station, and
a transferring step, by the base station control device, **of when** accumulated data exist, acquiring the accumulated data from the first base station, and transferring to the second base station.

6. The data retransmission control method according to Claim 5, wherein
the checking step comprises a step of transmitting, to the first base station, a deletion request signal requesting deletion of a channel established with the user equipment, and
the deletion request signal comprises an information element which queries the first base station as to the presence or absence of accumulated data.

7. The data retransmission control method according to Claim 6, further comprising steps of:
a step, by the first base station, **of deleting the** channel with the user equipment in response to the deletion request signal from the base station control device, and checking for the presence or absence of accumulated data, and returning to the base station control device a deletion response signal giving notification of deletion of the channel and comprising an information element which is the result of checking for the presence or absence of accumulated data, and when accumulated data exist, transmitting the accumulated data to the base station control device, and
a step, by the base station control device, **of** storing the accumulated data, and after establishment of a new channel between the user equipment and the second base station, and transmitting the accumulated data to the second base station.

8. The data retransmission control method according to Claim 5, comprising a step **of, by the** second base station, after the accumulated data have been transmitted to the user equipment, transmitting data addressed to the user equipment and transmitted to the second base station to the user equipment.

9. A base station control device, which in response to movement of user equipment switches a base station which performs communication with the user equipment using HSDPA (High Speed Downlink Packet Access) from a first base station to a second base station, comprising:
checking means for checking, upon switching the base station which communicates with the user equipment from the first base station to the second base station, whether accumulated data to be transmitted addressed to the user equipment exist at the first base station, and
transfer means, when accumulated data exist, for acquiring the accumulated data from the first base station, transferring the data to the second base station, and causing the accumulated data to be transmitted from the second base station to the user equipment.

10. The base station control device according to Claim 9, wherein
the checking means transmits to the first base station a deletion request signal requesting deletion of a channel which is established with the user equipment, and
the deletion request signal comprises an information element which queries the first base station as to the presence or absence of accumulated data.

11. The base station control device according to Claim 10, wherein the checking means receives from the first base station a deletion response signal giving notification of deletion of the channel and comprising an information element which is the result of checking for the presence or absence of accumulated data, and when accumulated data exist, receives and stores the accumulated data, and after establishment of a new channel between the user equipment and the second base station, transmits the accumulated data to the second base station.
